# EUROPÄISCHE PATENTSCHRIFT

(11) **EP 1 651 873 B1**
(45) Veröffentlichungstag und Bekanntmachung des Hinweises auf die Patenterteilung: **21.02.2007**
(21) Anmeldenummer: 04763588.3
(22) Anmeldetag: 29.07.2004
(51) Int. Cl.: F16B 7/18, F16B 23/00, B25B 15/00

(54) **VORRICHTUNG MIT ZWEI DURCH EINE VERBINDUNGSSCHRAUBE ZUSAMMENGEHALTENEN HOHLPROFILEN SOWIE WERKZEUG DAZU**
DEVICE COMPRISING TWO HOLLOW PROFILES THAT ARE HELD TOGETHER BY MEANS OF A CONNECTING SCREW, AND CORRESPONDING TOOL
DISPOSITIF COMPORTANT DEUX PROFILES CREUX ASSEMBLES PAR UNE VIS ET OUTIL CORRESPONDANT

(30) Priorität: 05.08.2003 DE 20312075 U
(43) Veröffentlichungstag der Anmeldung: 03.05.2006
(73) Patentinhaber: STAUSS, Ulrich, 78628 Rottweil (DE)
(72) Erfinder: STAUSS, Ulrich, 78628 Rottweil (DE)
(74) Vertreter: Hiebsch, Gerhard F.
(86) Internationale Anmeldenummer: PCT/EP2004/008482
(87) Internationale Veröffentlichungsnummer: WO 2005/017372

(56) Entgegenhaltungen:
- WO-A-93/03283
- DE-A- 2 254 582
- DE-U- 20 106 561

## Beschreibung

Die Erfindung betrifft eine Vorrichtung mit zwei stumpfetwa im rechten -- Winkel zueinander angeordneten Hohlprofilen, deren jedes einen zu seiner Profillängsachse parallelen Profilkanal sowie in zumindest einer Profilseitenfläche eine zum Profilkanal parallele hinterschnittene Längsnut aufweist, nach dem Oberbegriff des unabhängigen Patent anspruches. Zu dem erfasst die Erfindung ein Werkzeug zur Betätigung des Verbindungsbolzens.

Der Schrift zu DE 201 06 561 ist eine Vorrichtung zum Verbinden eines ersten Profilstabes mit einem stirnseitig an einer Längsseite des ersten Profilstabes anliegenden zweiten Profilstab zu entnehmen. Diese Profilstäbe sind entlang ihrer Längsseiten mit hinterschnittenen Längsnuten ausgestattet und enthalten eine Spannschraube mit Schraubenkopf und Gewindeschaft, die im Bereich des Schraubenkopfes in der hinterschnittenen Längsnut des ersten Profilstabes festlegbar sowie mit ihrem Gewindeschaft in eine im zweiten Profilstab ausgebildete Längsbohrung einschraubbar ist. Jener Schraubenkopf weist an einem tellerartigen Kragen eine Verzahnung auf, die mit einem Drehwerkzeug in Wirkverbindung gebracht werden kann. Das Drehwerkzeug ist ein Stab mit in eines seiner Enden achsparallel eingeformter Verzahnung, die mit der Kragenverzahnung in Berührung gebracht zu werden vermag.

Eine andere Vorrichtung wird in der EP 0 136 431 A2 beschrieben. Zwei Hohlprofile quadratischen Querschnitts mit zentrischem Profilkanal und in jeder Profilseitenfläche mittig verlaufender Längsnut werden durch eine handelsübliche Schraube verbunden. Diese durchsetzt eine im hinterschnittenen Nutraum der Längsnut angeordnete längliche Einlegeplatte mit U-förmig abstehenden Schenkeln, welche als Halterung und Verdrehsicherung die Längsnut durchgreifen. Um die Schraube betätigen zu können, bedarf es mehrerer im Nutentiefsten das Hohlprofil durchsetzender Durchbrüche; durch einen von diesen wird der in einen Schlitz des Schraubenkopfes einzusetzende Schraubenzieher eingeführt.

Die üblicherweise aus einer Aluminiumlegierung stranggepressten Hohlprofile müssen also nach ihrer Herstellung gesondert nachbearbeitet werden; das Einbringen der radialen Durchbrüche ist sehr aufwändig und mindert die Profilstabilität erheblich.

In Kenntnis dieses Standes der Technik hat sich der Erfinder das Ziel gesetzt, das eingangs geschilderte System zu verbessern und eine zusätzliche Bearbeitung der eingesetzten Halteprofile zu vermeiden. Die Längsnuten sollen so offen bleiben, dass gegebenenfalls Flächenelemente eingebracht zu werden vermögen.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale. Bei angegebenen Bemessungsbereichen sollen auch innerhalb der genannten Grenzen liegende Werte als Grenzwerte offenbart und beliebig einsetzbar sein.

Erfindungsgemäß verjüngt sich der Schraubenkopf der Verbindungsschraube an seinem -- querschnittlich kreisförmigen -- Umfang mit Nuten bzw. Kerben versehen, die in von der Schaftlängsachse ausgehenden -- und bezüglich ihres Verlaufes von dieser bestimmten -- Ebenen verlaufen und zwischen sich Rippen bilden. Dabei ist der Schraubenkopf zu einer vom Schaft fernen Kopffläche hin konisch, und die in einem Winkel zur Schaftlängsachse geneigte Wandfläche enthält jene Nuten bzw. Kerben. Dieser Winkel soll bevorzugt etwa 45° messen.

Nach einem weiteren Merkmal der Erfindung soll der Schraubenkopf zwischen einer schaftwärtigen Anschlussfläche und der geneigten Wandfläche einen Ringabschnitt konstanten Durchmessers aufweisen, in welchem die schaftwärtigen Enden der Nuten bzw. Kerben ein zinnenartiges Randmuster bilden. Die geneigte Wandfläche soll an der Kopffläche des Schraubenkopfes enden oder -- bei einer anderen Ausgestaltungan einer radialen Stufenfläche, welch letztere ringartig einen angeformten Firstkörper umgibt. Dieser zahn- oder kerbenfreie Endabschnitt stützt sich beim Anschrauben am Nutentiefsten oder Nutengrund ab und gewährleistet einen Gegenhalt.

Der an diesen Schraubenkopf anschließende Schaft derauch Verbindungsbolzen genannten -- Verbindungsschraube ist vorteilhafterweise mit einem Schneidgewinde versehen, das beim Zusammenbau ein Gegengewinde in die Innenfläche des Profilkanals schneidet.

Erfindungsgemäß ist dem Schaft der Verbindungsschraube ein -- mit einem mittigen Durchbruch versehener -- an die Anschlussfläche des Schraubenkopfes anlegbarer Aufsatzkragen zugeordnet, dessen Breite kürzer ist als die Breite der Längsnut des Hohlprofils; der Aufsatzkragen kann also in letztere abgesenkt werden. Bevorzugt soll an einen Sockelstreifen des Aufsatzkragens ein Kragenstück angeformt sein, wobei die Länge jenes Sockelstreifens größer ist als die Breite der Längsnut des Hohlprofils; hierdurch schlägt bei Drehung des Aufsatzkragens dieser beidseits der Längsnut innenseitig haltend an.

Diese Ausgestaltung wird dadurch ergänzt, dass dem Kragenstück des Aufsatzkragens axial eine das freie Ende des Schafts aufnehmende Gewindehülse mit Außengewinde zugeordnet ist. Dabei soll die Länge des Schaftes der Höhe des Aufsatzkragens samt der Länge der Gewindehülse etwa entsprechen. Allerdings soll in die Unterfläche des Sockelstreifens eine axial ausgerichtete Erweiterung des Durchbruches eingeformt sein zum zeitweiligen -- sicherndenAufnehmen eines Bereiches des Ringabschnittes des Schraubenkopfes. Jene Gewindehülse ist vorteilhafterweise so konzipiert, dass ihr Außendurchmesser der Breite des Aufsatzkragens etwa entspricht, dass also die Gewindehülse in die Längsnut einsetzbar ist.

Im Rahmen der Erfindung liegt ein Werkzeug zur Betätigung der Verbindungsschraube bei in einem Nutenraum eines Hohlprofils angeordnetem Schraubenkopf. Dieses Werkzeug enthält ein Rundprofil mit einends vorgesehenem Steckkopf mit Längskerben, die in dessen -- bevorzugt sich konisch verjüngende -- Umfangsfläche eingeformt sind und zur Betätigung bzw. Drehung des Verbindungsbolzens die radial abstehenden Rippen des Schraubenkopfes aufnehmen; das Muster der Längskerben des Werkzeuges entspricht also der Anordnung der Rippen des Schraubenkopfes.

Als günstig hat es sich erwiesen, den Durchmesser des Rundprofils kürzer zu gestalten als die Tiefe des Nutenraumes des Hohlprofils, um das Einführen des Werkzeuges in den Nutenraum zu ermöglichen.

Zudem soll der Winkel zwischen der Achse des Rundprofils und der Umfangs- oder Außenfläche des Steckkopfes etwa 20° bis 40° messen, insbesondere etwa 25°. Diese Maßgabe erleichtert ebenfalls das Einführen des Werkzeuges, dessen Nuten die Rippen des Schraubenkopfes an der Verbindungsschraube aufnehmen sollen.

Um Schäden am Hohlprofil hintanzuhalten, liegt erfindungsgemäß der beschriebenen Umfangs- oder Außenfläche des Steckkopfes ein Schutzabschnitt einer Schutzfläche an, welch letztere lösbar am Randprofil, nämlich auf dem gewählten Nutentiefsten, festgelegt ist. Diese Schutzfläche soll als Schutzblech gestaltet sein und einen zur Achse des Rundprofils radialen und letzteres umfangenden Halteabschnitt sowie einen aus dessen Fläche herausgebogenen, in radialem Abstand zum Rundprofil verlaufenden Seitenabschnitt aufweisen, an den jener Schutzabschnitt geneigt angeformt ist.

Dank der erfinderischen Ausgestaltung bedarf es keiner besonderen Gestaltung oder Nachbearbeitung des Hohlprofils mehr. Die Verbindungsschraube wird einfach in das Kernloch -- Regel- oder Selbstformgewinde -- des einen Hohlprofils eingedreht und dann stirnseitig in das andere Hohlprofil eingeschoben. Es ist auch vorstellbar, zuerst die erwähnte Gewindehülse in das Kernloch einzuschrauben, um z.B. ein Stahl-Regelgewinde zum Einschrauben der Verbindungs- oder Zahnradschraube zur Verfügung zu haben. Letztere kann zur Reibungsreduzierung mit einer Schmierstoff-Beschichtung für ein leichteres Eindrehen versehen werden.

Außerdem kann als Ausdrehsicherung der Schraubenkopf an der Unterseite mit punktlinienförmigen oder zahnförmigen Erhebungen versehen sein.

Der Schraubenkopf mit dem Zahnrand sollte so groß wie möglich sein, um die größten Anzugsmomente zu erreichen. Gleichzeitig sollte er aber nicht störend über den Kernbereich des Profiles hinausgehen. Je größer die Differenz zwischen der Zähnezahl der Schraube und der Zähnezahl des Schraubendrehers ist, umso größer wird die Übersetzung und damit die Umfangskraft, die beim Anziehen auf die Zahnrandschraube bzw. die Verbindungsschraube wirken.

Zusätzlich kann im Schraubenkopf ein Antrieb vorgesehen werden, der entweder dem des Zahnrand-Schraubendrehers entspricht, um mit nur einem Schlüssel arbeiten zu können oder ein anderes Profil (z.B. Innensechskant, Innensechsrund), mit welchem die Schraube zuerst in das Kernloch eingedreht und dann wieder etwas zurückgedreht werden soll, bevor sie zusammen mit dem Hohlprofil in den Schlitz des Gegenprofils eingeführt und festgezogen wird.

Die Maße für Schraube und Schraubendreher richten sich natürlich nach den zu verbindenden Profilen. Alle kompatiblen Profile können jedoch mit der gleichen Schraube verbunden werden. Die Festigkeit der Verbindung ist ausreichend für einfache Rahmen, Schutzzäune, Einhausungen usw. Eine Verdrehsicherung der zu verbindenden Profile ist dann gegeben, wenn mindestens eine Nut mit einem Flächenelement belegt ist. Die Verbindung ist äußerst einfach, schnell und dadurch natürlich sehr kostengünstig.

Das Werkzeug wird nahe jenes Verbindungsbolzens in die ihn aufnehmende Längsnut eingeführt und sein geneigter Steckkopf zwischen Nuttiefstes und Schraubenkopf eingeschoben. Wenn dessen Rippen mit den Nuten des Werkzeuges kämmen, kann die Betätigung des Verbindungsbolzens ohne weiteres durchgeführt werden. Die vom Erfinder gesehene Aufgabe ist also auf bestechend einfache Weise gelöst.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in:
- Fig. 1:: die Stirnansicht eines Längsnuten aufweisenden stranggepressten Hohlprofils;
- Fig. 2:: einen vergrößerten Längsschnitt durch Abschnitte zweier rechtwinkelig zueinander angeordneter Hohlprofile mit Verbindungsorgan;
- Fig. 3:: einen Ausschnitt aus Fig. 2;
- Fig. 4:: eine teilweise geschnittene Seitenansicht eines gegenüber Fig. 2, 3 anders gestalteten Verbindungsorgans in axial verschobener Stellung seiner Einzelteile;
- Fig. 5:: eine gegenüber Fig. 4 um 90° gedrehte Seitenansicht des Verbindungsorgans.

Ein aus einer Leichtmetalllegierung stranggepresstes Hohlprofil 10 quadratischen Querschnitts mit durch das -- von einem in seinem zentrischen Profilkörper 12 in der Profillängsachse A verlaufenden, mit radialen Randnuten 16 versehenen Profilkanal 14 kreisförmigen Querschnittes des Durchmessers d bestimmten -- Zentrum Z seiner Stirnfläche 18 gelegten Querschnittsachsen B, B₁ als Symmetrieachsen weist jeweils in der Mitte seiner Profilseitenflächen 20 eine -- beidends von Formrippen 24 der Dicke a von hier 4 mm begrenzte -- Längsnut 22 einer Breite b von beispielsweise 8 mm auf, die zur Profillängsachse A hin in einen querschnittlich hinterschnittenen Nutenraum 26 übergeht.

Dieser ist eine von jenen Formrippen 24 übergriffene rinnenartige Ausnehmung etwa dreiecksförmigen Querschnitts einer vom Nutentiefsten 27 bestimmten Tiefe e von 10 mm sowie einer maximalen Breite f von 22 mm und bietet an der Innenseite der Formrippen 24 eine axiale Einschubbahn 28 der Höhe h an.

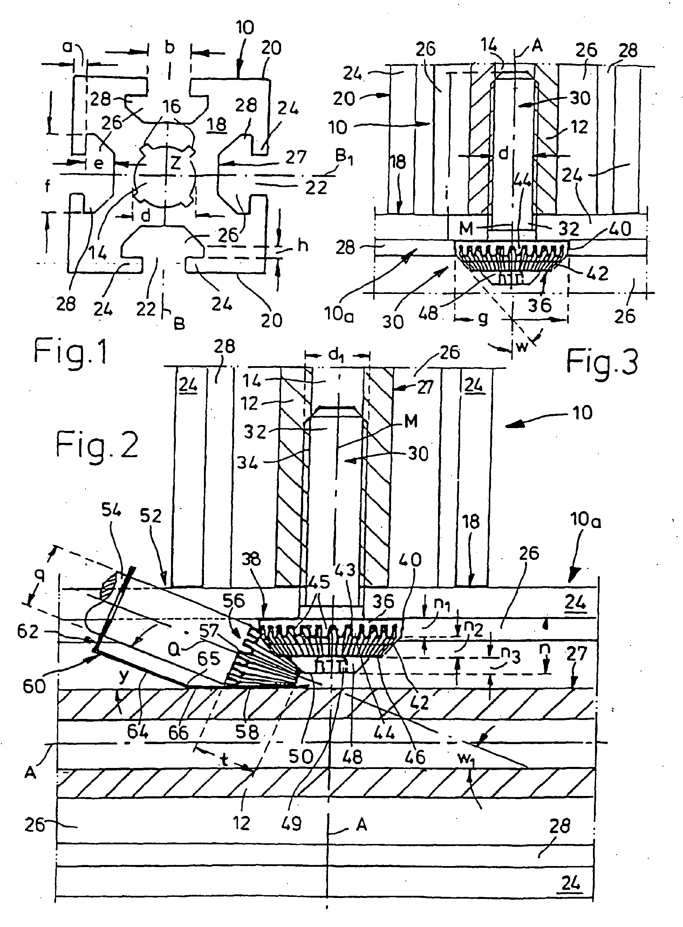

Gemäß Fig. 2, 3 ist dem Hohlprofil 10 an seiner Stirnfläche 18 ein seine Profillängsachse A querendes Hohlprofil 10ₐ gleicher Formgebung zugeordnet. Um beide Hohlprofile 10, 10ₐ aneinander festlegen zu können, wird eine besonders gestaltete Verbindungsschraube 30 eingesetzt. Diese besteht aus -- gegenüber dem Hohlprofil 10, 10ₐ -- hartem Metall und umfasst einen Schraubschaft 32 der Länge i von beispielsweise 25 mm sowie einem tellerartigen Schraubenkopf 36 des Durchmessers g von hier 15 mm und der Höhe n von 5 mm. Jener Schraubenschaft 32 ist mit einem -- in Fig. 2, 3 der Übersichtlichkeit halber lediglich angedeutetenSchneidgewinde 34 versehen, dessen Außendurchmesser d₁ größer ist als der Durchmesser d jenes Profilkanals 14. In des letzteren Innenfläche hat sich das Schneidgewinde 34 in skizzierter Verbindungsstellung eingeschnitten, und die Schaftlängsachse M verläuft in der Profillängsachse A.

Die schaftwärtige, die Schaftlängsachse M querende Anschlagfläche 38 des Schraub- oder Schraubenkopfes 36 geht in einen zylindrischen Ringabschnitt 40 der Höhe n₁ und jenes Durchmessers g der Umfangswand des Schraub- oder Schraubenkopfes 36 über. An den Ringabschnitt 40 schließt eine querschnittlich zur Schaftlängsachse M in einem Winkel w von hier 45° geneigte Wandfläche 42 axialer Höhe n₂ an; in diese Wandfläche 42 sind in radialer Richtung Nuten oder Kerben 43 eingeformt, die zwischen sich Rippen 44 bilden sowie in jenem Ringabschnitt 40 ein zinnenartiges Randmuster 45. In Abstand zu jener Anschlagfläche 38 geht der sich konisch verjüngende Wandabschnitt 42 und damit auch jede der Kerben 43 in eine ringförmige, radial gerichtete Stufenfläche 46 über, die einen angeformten Firstkörper 48 der Höhe n₃ umgibt. Dessen glatte Umfangsfläche ist entsprechend dem innerhalb des Schraubkopfes 36 zugeordneten Wandabschnitt 42 querschnittlich achswärts geneigt. Der Firstkörper 48 endet an einer die Schraubkopf 36 abschließenden Kopffläche 50, in der eine Innensechskanteinformung 49 zu erkennen ist.

Um die gewünschte Verbindung beider Hohlprofile 10, 10ₐ herzustellen, wird der Schraubkopf 36 des Verbindungsbolzens bzw. der Verbindungsschraube 30 in einen der Nutenräume 26 des in Fig. 2, 3 unteren Hohlprofils 10ₐ eingeschoben; der Schraubschaft 32 gleitet dabei in der Längsnut 22 des Hohlprofils 10ₐ in achsparalleler Richtung. An vorbestimmter Stelle wird zu des letzteren Profillängsachse A die Stirnfläche 18 des anderen Hohlprofils 10 rechtwinkelig herangeführt, und dessen Profilkanal 14 wird dem Schraubschaft 32 axial zugeordnet.

Das Eindrehen des Schraubschaftes 32 in den Profilkanal 14 bzw. den diesen umgebenden Profilkörper 12 des anderen Hohlprofils 10 erfolgt mittels eines in Fig. 2 teilweise skizzierten Werkzeuges 52. Dieses besteht aus einem -- gegebenenfalls in Längsrichtung winkelförmig gebogenenRundprofil 54 des Durchmessers q von hier 8 mm, bevorzugt aus einem Stahlstab. Jener Durchmesser soll kürzer sein als die Höhe oder Tiefe e des Nutenraumes 26 des Hohlprofils 10, 10ₐ. Dieses Rundprofil 54 ist auf eine Länge t von etwa 10 mm einends als Steckkopf 56 mit sich in einem Winkel y von etwa 25° konisch verjüngender Umfangsfläche 57 ausgebildet, welche mit parallel gerichteten Längskerben 58 zur Aufnahme von Rippen 44 des Schraubkopfes 36 versehen ist. Der Umfangs- oder Außenfläche jenes Steckkopfes 56 liegt ein entsprechend geneigter Schutzabschnitt 66 eines i.w. als Winkelstück ausgebildeten Schutzbleches an; letzteres wird mittels eines Radialabschnitts 62 auf das Rundprofil 54 gesteckt, zu dessen Längsachse Q ein Seitenabschnitt 64 des Schutzbleches 60 in Abstand parallel verläuft. Dieses ist nahe dem Steckkopf 56 zu diesem hin unter Bildung jenes Schutzabschnittes 66 an einer Knickstelle 65 abgewinkelt.

Der Steckkopf 56 dieses Werkzeuges 52 wird gemäß Fig. 3 zwischen den Schraubkopf 36 der platzierten Verbindungsschraube 30 und das -- durch das Schutzblech 60 abgedeckte -- Nutentiefste 27 der entsprechenden Längsnut 22 eingeschoben, mit dem die Steckkopfachse Q einen Winkel w₁ begrenzt. Durch Drehen des -- sich auf dem liegenden Schutzabschnitt 66 des Schutzbleches 60 abwälzendenSteckkopfes 56 um dessen Längsachse Q erfolgt die Betätigung des mit diesem zeitweilig verzahnten Schraubkopfes 36 des Verbindungsbolzens 30 - und damit das Eindrehen des Schraubschaftes 32.

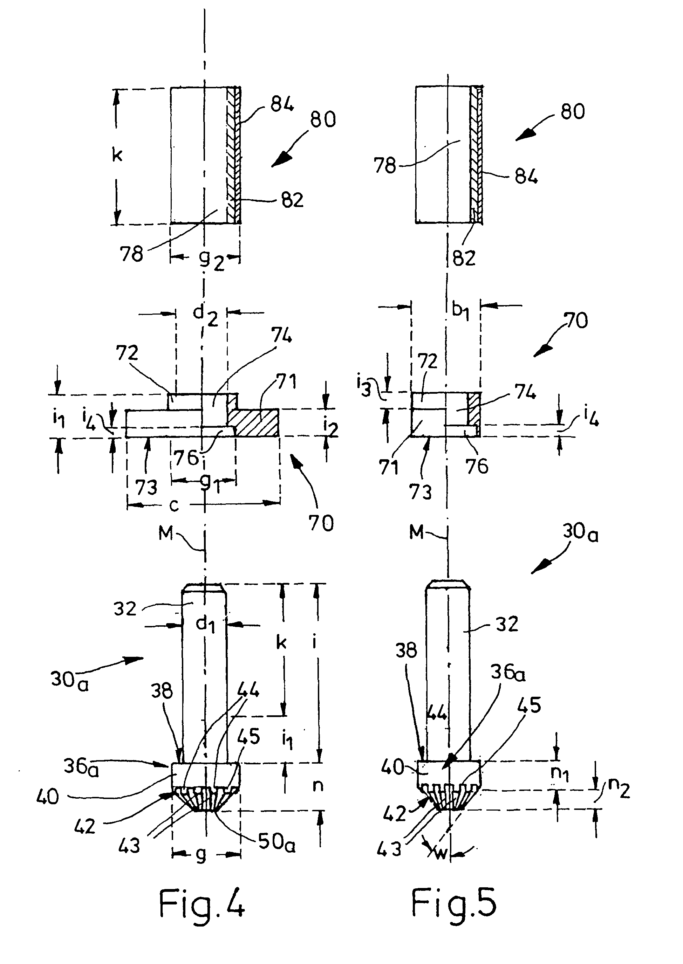

Eine andere Ausgestaltung des Verbindungsbolzens 30ₐ bieten die Fig. 4, 5 an. Dessen Schraubkopf 36ₐ weist einen verhältnismäßig hohen Ringabschnitt 40 auf, an den ein konischer Wandabschnitt 42 etwa gleicher Höhe n₂ anschließt. Letzterer endet an einer freien Kopffläche 50ₐ; der oben beschriebene Firstkörper fehlt hier.

Dem Verbindungsbolzen 30ₐ ist ein grundrisslich rechteckiger Aufsatzkragen 70 der Höhe i₁ sowie der Breite g₁ an einem Sockelstreifen 71 -- der Höhe i₂, der Länge c sowie der Breite b₁ -- und einem angeformten Kragenstück 72 der Höhe i₃ zugeordnet. Der rechteckige Aufsatzkragen 70 ist mit einem zentralen Durchbruch 74 des Durchmessers d₂ zur Aufnahme des Schaftes 32 des Durchmessers d₁ versehen, welcher an der Unterfläche 73 in eine den Ringabschnitt 40 des Schraubkopfes 36ₐ aufnehmenden kreisförmigen Erweiterung 76 mündet. Letztere weist einen den Durchmesser g des Schraubenkopfes 36ₐ geringfügig übersteigenden Durchmesser g₁ auf sowie eine geringe axiale Tiefe i₄.

Oberhalb des Aufsatzkragens 70 ist in Fig. 4, 5 eine axial zugeordnete M8-Gewindehülse 80 der Länge k und des Außendurchmessers g₂ dargestellt, welcher etwa dem Durchmesser g des Schraubkopfes 36ₐ entspricht. Die Wandung 82 dieser Gewindehülse 80 ist mit einem Außengewinde 89 ausgestattet. Der Schaft 32 wird -- nach dem Anbringen des Aufsatzkragens 70 -- in den Innenraum 78 der Gewindehülse 80 eingebracht, in der er dann fest sitzt. Diese Einheit aus Verbindungsbolzen 30ₐ, Aufsatzkragen 70 und Gewindehülse 80 wird dann einem Hohlprofil 10ₐ zugeführt. Da die Breite b von dessen Längsnuten 22 etwas größer ist als die Breite b₁ des Aufsatzkragens 70 kann dieser in achsparalleler Lage radial durch eine der Längsnuten 22 hindurchgeführt und im zugeordneten Nutenraum 26 gedreht werden; dessen Breite f ist etwas größer als die Länge c des Sockelstreifens 71. Dessen Höhe i₂ entspricht bei einem Hohlprofil nach Fig. 1 der Höhe h von dessen Einschubbahn 28 bzw. bei Nutenräumen rechteckigen Querschnitts deren radialer Höhe.

Die beschriebene Ausgestaltung nach Fig. 4, 5 hat den Vorzug, dass sie nicht von der Profilstirnfläche 18 eingeschoben werden muss; nach dem geschilderten Drehen des Aufsatzkragens 70 kann sofort der zu den Fig. 1 bis 3 geschilderte Befestigungsvorgang für das andere Hohlprofil 10 beginnen.

Insgesamt wird also die Verbindungs- oder Zahnrandschraube 30, 30ₐ in das Kernloch bzw. den Profilkanal 14 des stumpf zu verbindenden Hohlprofils 10 so eingeschraubt, dass sich danach der Schraubschaft oder Zahnrandbolzen 32 samt Schraubkopf 36, 36ₐ an der zu verbindenden Stelle gerade noch in die Längsnut 22 einführen lässt. Der bewegliche Schraubkopf 36, 36ₐ wird in Befestigungsstellung quer zur Längsnut 22 gedreht und dann der Zahnrandbolzen 32 mit dem Werkzeug 52 festgedreht.

## Patentansprüche

1. Vorrichtung mit zwei etwa im rechten Winkel zueinander angeordneten Hohlprofilen (10, 10ₐ), deren jedes einen zu seiner Profillängsachse (A) parallelen Profilkanal (14) sowie in zumindest einer Profilseitenfläche (20) eine zum Profilkanal (14) parallele hinterschnittene Längsnut (22) aufweist, wobei die beiden Hohlprofile (10, 10ₐ) durch eine Verbindungsschraube (30, 30ₐ) zusammengehalten sind, deren Schaft (32) in den Profilkanal (14) des einen Hohlprofils (10) eingreift und deren Schraubenkopf (36, 36ₐ) in einer hinterschnittenen Längsnut (22) des anderen Hohlprofils (10ₐ) lagert, wobei der Schraubenkopf (36, 36ₐ) an seinem Umfang mit Nuten bzw. Kerben (43) versehen ist, welche in von der Schaftlängsachse (M) ausgehenden Ebenen verlaufen und zwischen sich Rippen (44) bilden,
**dadurch gekennzeichnet,**
**dass** sich der Schraubenkopf (36, 36ₐ) zu einer vom Schaft (32) fernen Kopffläche (50, 50ₐ) hin konisch verjüngt und diese in einem Winkel (w) zur Schaftlängsachse (M) geneigte Wandfläche (42) mit den Nuten oder Kerben (43) bzw. den Rippen (44) versehen ist.

2. Vorrichtung nach Anspruch 1, **gekennzeichnet durch** einen Winkel (w) von etwa 45°.

3. Vorrichtung nach Anspruch 1 oder 2, **dadurch gekennzeichnet, dass** der Schraubenkopf (36, 36ₐ) zwischen einer schaftwärtigen Anschlussfläche (38) und der geneigten Wandfläche (42) einen Ringabschnitt (40) konstanten Durchmessers (g) aufweist, in welchem die schaftwärtigen Enden der Kerben (43) bzw. der Rippen (44) ein zinnenartiges Randmuster (45) bilden.

4. Vorrichtung nach einem der Ansprüche 1 bis 3, **dadurch gekennzeichnet, dass** die geneigte Wandfläche (42) an einer radialen Stufenfläche (46) endet und letztere ringartig einen angeformten, eine Kopffläche (50) aufweisenden Firstkörper (48) des Schraubenkopfes (36) umgibt (Fig. 2).

5. Vorrichtung nach einem der Ansprüche 1 bis 3, **dadurch gekennzeichnet, dass** die geneigte Wandfläche (42) an der Kopffläche (50ₐ) des Schraubenkopfes (36ₐ) endet (Fig. 4).

6. Vorrichtung nach Anspruch 4 oder 5, **dadurch gekennzeichnet, dass** in der Kopffläche (50, 50ₐ) eine Innenmehrkanteinformung (49) vorgesehen ist.

7. Vorrichtung nach einem der Ansprüche 1 bis 6, **dadurch gekennzeichnet, dass** der Schaft (32) der Verbindungsschraube (30, 30ₐ) mit einem Schneidgewinde (34) versehen ist.

8. Vorrichtung nach einem der Ansprüche 1 bis 7, **dadurch gekennzeichnet, dass** dem Schaft (32) der Verbindungsschraube (30ₐ) ein mit einem mittigen Durchbruch (74) versehener, auf die Anschlussfläche (38) des Schraubenkopfes (36ₐ) anlegbarer Aufsatzkragen (70) zugeordnet ist, dessen Breite (b₁) kürzer ist als die Breite (b) der Längsnut (22) des Hohlprofils (10, 10ₐ).

9. Vorrichtung nach Anspruch 8, **gekennzeichnet durch** ein an einem Sockelstreifen (71) des Aufsatzkragens (70) angeformtes Kragenstück (72), wobei die Länge (c) des Sockelstreifens größer ist als die Breite (b) der Längsnut (22) des Hohlprofils (10, 10ₐ).

10. Vorrichtung nach Anspruch 9, **dadurch gekennzeichnet, dass** dem Kragenstück (72) des Aufsatzkragens (70) axial eine das freie Ende des Schaftes (32) aufnehmende Gewindehülse (80) mit Außengewinde (84) zugeordnet ist.

11. Vorrichtung nach Anspruch 10, **dadurch gekennzeichnet, dass** Schaft (32) und Gewindehülse (80) in Einbaustellung eine feste Einheit bilden.

12. Vorrichtung nach Anspruch 9 und 10, **dadurch gekennzeichnet, dass** die Länge (i) des Schaftes (32) der Höhe (i₁) des Aufsatzkragens (70) samt der Länge (k) der Gewindehülse (80) etwa entspricht.

13. Vorrichtung nach Anspruch 9 oder 12, **dadurch gekennzeichnet, dass** in die Unterfläche (73) des Sockelstreifens (71) eine axial ausgerichtete Erweiterung (76) des Durchbruches (74) eingeformt ist zur zeitweiligen Aufnahme eines Bereiches des Ringabschnittes (40) des Schraubenkopfes (36, 36ₐ).

14. Vorrichtung nach einem der Ansprüche 10 bis 13, **dadurch gekennzeichnet, dass** der Außendurchmesser (g₂) der Gewindehülse (80) der Breite (b₁) des Aufsatzkragens (70) etwa entspricht.

15. Werkzeug zur Betätigung des Verbindungsbolzens (30, 30ₐ) nach wenigstens einem der voraufgehenden Ansprüche bei in einem Nutenraum (26) eines Hohlprofils (10ₐ) angeordnetem Schraubenkopf (36, 36ₐ), wobei in ein Rundprofil (54) einends ein Steckkopf (56) eingeformt ist mit Längskerben (58) in dessen Umfangsfläche (57), **dadurch gekennzeichnet, dass** sich die Umfangsfläche (57) des Steckkopfes (56) konisch verjüngt.

16. Werkzeug nach Anspruch 15, **dadurch gekennzeichnet, dass** der Durchmesser (q) des Rundprofils (54) des Werkzeuges (52) kürzer ist als die Tiefe (e) des Nutenraumes (26) des Hohlprofils (10, 10ₐ).

17. Werkzeug nach Anspruch 15 oder 16, **gekennzeichnet durch** einen Winkel (y) zwischen der Achse (Q) des Rundprofils (54) und der Umfangs- oder Außenfläche (57) des Steckkopfes (56) von etwa 20° bis 40°, insbesondere von etwa 25°.

18. Werkzeug nach einem der Ansprüche 15 bis 17, **dadurch gekennzeichnet, dass** der Umfangs- oder Außenfläche (57) des Steckkopfes (56) ein Schutzabschnitt (66) einer Schutzfläche (60) anliegt, welche lösbar am Rundprofil (54) festgelegt ist.

19. Werkzeug nach Anspruch 18, **dadurch gekennzeichnet, dass** die Schutzfläche als Schutzblech (60) einen zur Achse (Q) des Rundprofils (54) radialen und letzteres umfangenden Halteabschnitt (62) sowie einen an dessen Fläche herausgebogenen Seitenabschnitt (64) aufweist, an den der Schutzabschnitt geneigt angeformt ist.

20. Werkzeug nach Anspruch 19, **dadurch gekennzeichnet, dass** der Seitenabschnitt (64) in radialem Abstand zum Rundprofil (54) verläuft.

## Claims

1. Device having two hollow profiles (10, 10ₐ) arranged approximately at right angles to one another of which each has a profile channel (14) parallel to its profile longitudinal axis as well as in at least one profile side surface (20) an undercut longitudinal groove (22) parallel to the profile channel (14), wherein the two hollow profiles (10, 10ₐ) are held together by a connecting screw (30, 30ₐ) whose shaft (32) engages in the profile channel (14) of one hollow profile (10) and whose screw head (36, 36ₐ) is mounted in an undercut longitudinal groove (22) of the other hollow profile (10ₐ), wherein the screw head (36, 36ₐ) is provided on its circumference with grooves or notches (43) which run in planes emanating from the longitudinal axis of the shaft (M) and between them form ribs (44),
**characterised in that**
the screw head (36, 36ₐ) tapers conically to a head surface (50, 50ₐ) remote from the shaft and this wall surface (42) inclined at an angle (w) to the longitudinal axis of the shaft (M) is provided with the grooves or notches (43) or the ribs (44).

2. Device according to claim 1, **characterised by** an angle (w) of approximately 45°.

3. Device according to claim 1 or 2, **characterised in that** between a shaftwards connecting surface (38) and the inclined wall surface (42) the screw head (36, 36ₐ) has an annular section (40) of constant diameter (g) in which the shaftward ends of the notches (42) or the ribs (44) form a crenellated perimeter pattern (45).

4. Device according to any of claims 1 to 3, **characterised in that** the inclined wall surface (42) terminates on a radial step surface (46) and the latter surrounds annularly a ridged coping member (48) of the screw head (36) that is moulded in place and possesses a head surface (50) (see Fig 2).

5. Device according to any of claims 1 to 3, **characterised in that** the inclined wall surface (42) terminates on the head surface (50ₐ) of the screw head (36ₐ) (see Fig 4).

6. Device according to claim 4 or 5, **characterised in that** an inner polygonal moulding (49) is provided in the head surface (50, 50ₐ).

7. Device according to any of claims 1 to 6, **characterised in that** the shaft (32) of the connecting screw (30, 30ₐ) is provided with a tapping thread (34).

8. Device according to any of claims 1 to 7, **characterised in that** assigned to the shaft (32) of the connecting screw (30ₐ) is a mounting collar (70) provided with a central opening (74) and capable of being laid onto the connecting surface (38) of the screw head (36ₐ), the width (b₁) of which collar is less than the width (b) of the longitudinal groove (22) of the hollow profile (10, 10ₐ).

9. Device according to claim 8, **characterised by** a collar piece (72) moulded in place on a skirting strip (71) of the mounting collar (70), wherein the length (c) of the skirting strip is greater than the width (b) of the longitudinal groove (22) of the hollow profile (10, 10ₐ).

10. Device according to claim 9, **characterised in that** assigned to the collar piece (72) of the mounting collar (70) is a threaded sleeve (80) with external thread (84) axially accommodating the free end of the shaft (32).

11. Device according to claim 10, **characterised in that** the shaft (32) and threaded sleeve (80) in the installed position form a fixed unit.

12. Device according to claim 9 and 10, **characterised in that** the length (i) of the shaft (32) coincides approximately with the height (i₁) of the mounting collar (70) together with the length (k) of the threaded sleeve (80).

13. Device according to claim 9 or 12, **characterised in that** formed into the lower surface (73) of the skirting strip (71) is an axially oriented extension (76) of the opening (74) for the temporary accommodation of a region of the annular section (40) of the screw head (36, 36ₐ).

14. Device according to any of claims 10 to 13, **characterised in that** the outer diameter (g₂) of the threaded sleeve (80) coincides approximately with the width (b₁) of the mounting collar (70).

15. Tool for actuating the connecting screw (30, 30ₐ) according to at least one of the preceding claims for a screw head (36, 36ₐ) arranged in a groove space (26) of a hollow profile (10ₐ), wherein formed into a round profile (54) at one end is a plug-in head (56) with longitudinal notches (58) in the circumferential surface (57) thereof, **characterised in that** the circumferential surface (57) of the plug-in head (56) tapers conically.

16. Tool according to claim 15, **characterised in that** the diameter (q) of the round profile (54) of the tool (52) is less than the depth (e) of the groove space (26) of the hollow profile (10, 10ₐ).

17. Tool according to claim 15 or 16, **characterised by** an angle (y) between the axis (Q) of the round profile (54) and the circumferential or outer surface (57) of the plug-in head (56) of approximately 20° to 40°, in particular of approximately 25°.

18. Tool according to any of claims 15 to 17, **characterised in that** fitting against the circumferential or outer surface (57) of the plug-in head (56) is a protective section (66) of a protective surface (60) which is fixed detachably on the round profile (54).

19. Tool according to claim 18, **characterised in that** the protective surface as protective plate (60) possesses a retaining section (62) radial to the axis (Q) of the round profile (54) and surrounding the latter as well as a side section (64) bent out on the surface of the retaining section, on which side section the protective section is formed at an inclination.

20. Tool according to claim 19, **characterised in that** the side section (64) runs at a radial spacing with respect to the round profile (54).

## Revendications

1. Dispositif comportant deux profilés creux (10, 10a) disposés à peu près à angle droit l'un par rapport à l'autre, dont chacun comporte un conduit de profilé (14) parallèle à son axe longitudinal de profilé (A) et, au moins dans une face latérale de profilé (20), une rainure longitudinale (22) contre-dépouillée parallèle au conduit de profilé (14), les deux profilés creux (10, 10a) étant assemblés à l'aide d'une vis de raccordement (30, 30a) dont la tige (32) s'engage dans le conduit de profilé (14) d'un profilé creux (10) et dont la tête de vis (36, 36a) est logée dans une rainure longitudinale (22) contre-dépouillée de l'autre profilé creux (10a), la tête de vis (36, 36a) étant munie sur sa circonférence de rainures ou entailles (43) qui s'étendent dans des plans partant de l'axe longitudinal de la tige (M) et qui forment des nervures (44) entre elles, **caractérisé en ce que** la tête de vis (36, 36a) s'amincit en forme de cône vers une face de tête (50, 50a) éloignée de la tige (32) et cette face de paroi (42) inclinée sous un angle (w) par rapport à l'axe longitudinal de la tige (M) est munie des rainures ou entailles (43) ou des nervures (44).

2. Dispositif selon la revendication 1, **caractérisé par** un angle (w) d'environ 45°.

3. Dispositif selon la revendication 1 ou 2, **caractérisé en ce que** la tête de vis (36, 36a) présente un segment annulaire (40) ayant un diamètre constant (g) entre une face de raccordement (38) dirigée vers la tige et la face de paroi (42) inclinée, dans lequel les extrémités des entailles (43) ou des nervures (44) dirigées vers la tige forment un dessin de bord crénelé (45).

4. Dispositif selon l'une quelconque des revendications 1 à 3, **caractérisé en ce que** la paroi inclinée (42) se termine dans une face radiale à gradins (46) et **en ce que** cette dernière entoure, à la manière d'un anneau, un corps de faîte moulé (48) de la tête de vis (36) comportant une face de tête (50) (figure 2).

5. Dispositif selon l'une quelconque des revendications 1 à 3, **caractérisé en ce que** la paroi inclinée (42) se termine dans la face de tête (50a) de la tête de vis (36a) (figure 4).

6. Dispositif selon la revendication 4 ou 5, **caractérisé en ce qu'**il est prévu un moulage polygonal intérieur (49) dans la face de tête (50, 50a).

7. Dispositif selon l'une quelconque des revendications 1 à 6, **caractérisé en ce que** la tige (32) de la vis de raccordement (30, 30a) est munie d'un filetage taraudeur (34).

8. Dispositif selon l'une quelconque des revendications 1 à 7, **caractérisé en ce qu'**une collerette rapportée (70) munie d'un percement central (74) pouvant être posée sur la face de raccordement (38) de la tête de vis (36a) est associée à la tige (32) de la vis de raccordement (30a), collerette dont la largeur (b₁) est plus courte que la largeur (b) de la rainure longitudinale (22) du profilé creux (10, 10a).

9. Dispositif selon la revendication 8, **caractérisé par** un élément de collerette (72) moulé dans une strie de socle (71) de la collerette rapportée (70), la longueur (c) de la strie de socle étant plus longue que la largeur (b) de la rainure longitudinale (22) du profilé creux (10, 10a).

10. Dispositif selon la revendication 9, **caractérisé en ce qu'**une douille filetée (80) avec un filetage mâle (84) recevant axialement l'extrémité libre de la tige (32) est associée à l'élément de collerette (72) de la collerette rapportée (70).

11. Dispositif selon la revendication 10, **caractérisé en ce que** la tige (32) et la douille filetée (80) forment une unité fixe dans la position de montage.

12. Dispositif selon les revendications 9 et 10, **caractérisé en ce que** la longueur (i) de la tige (32) correspond à peu près à la hauteur (i₁) de la collerette rapportée (70) plus la longueur (k) de la douille filetée (80).

13. Dispositif selon la revendication 9 ou 12, **caractérisé en ce qu'**un élargissement (76) du percement (74) dirigé dans le sens axial est moulé dans la face inférieure (73) de la strie de socle (71) pour la réception temporaire d'une zone du segment annulaire (40) de la tête de vis (36, 36a).

14. Dispositif selon l'une quelconque des revendications 10 à 13, **caractérisé en ce que** le diamètre extérieur (g₂) de la douille filetée (80) correspond à peu près à la largeur (b₁) de la collerette rapportée (70).

15. Outil pour l'actionnement du boulon de raccordement (30, 30a) selon au moins l'une quelconque des revendications précédentes pour une tête de vis (36, 36a) disposée dans un espace de rainure (26) d'un profilé creux (10a), moyennant quoi, dans un profilé rond (54), à une extrémité, une tête d'emboîtement (56) est formée avec des entailles longitudinales (58) dans la surface périphérique (57) de celle-ci, **caractérisé en ce que** la surface périphérique (57) de la tête d'emboîtement (56) s'amincit en forme de cône.

16. Outil selon la revendication 15, **caractérisé en ce que** le diamètre (q) du profilé rond (54) de l'outil (52) est plus court que la profondeur (e) de l'espace de rainure (26) du profilé creux (10, 10a).

17. Outil selon la revendication 15 ou 16, **caractérisé par** un angle (y) d'environ 20° à 40°, en particulier d'environ 25°, entre l'axe (Q) du profilé rond (54) et la surface périphérique ou extérieure (57) de la tête d'emboîtement (56).

18. Outil selon l'une quelconque des revendications 15 à 17, **caractérisé en ce qu'**un segment de protection (66) d'une face de protection (60), qui est fixé de manière amovible au profilé rond (54), s'appuie sur la surface périphérique ou extérieure (57) de la tête d'emboîtement (56).

19. Outil selon la revendication 18, **caractérisé en ce que** la face de protection sous forme de tôle de protection (60) comporte un segment de retenue (62) radial par rapport à l'axe (Q) du profilé rond (54) et entourant ce dernier ainsi qu'un segment latéral (64) plié sur la face de celui-ci sur lequel le segment de protection est formé obliquement.

20. Outil selon la revendication 19, **caractérisé en ce que** le segment latéral (64) s'étend à une distance radiale par rapport au profilé rond (54).
